## Europäisches Patentamt

## European Patent Office

## Office européen des brevets

(11) Veröffentlichungsnummer: **0 009 461**
A2

# EUROPÄISCHE PATENTANMELDUNG

(21) Anmeldenummer: 79710093.0

(22) Anmeldetag: 26.09.79

(51) Int. Cl.³: **H 04 Q 11/04,** H 04 M 9/02, H 04 L 11/16

(30) Priorität: 26.09.78 DE 2842250
08.11.78 DE 2848931

(43) Veröffentlichungstag der Anmeldung: 02.04.80
**Patentblatt 80/7**

(84) Benannte Vertragsstaaten: **AT BE CH FR GB IT LU NL SE**

(71) Anmelder: **Heinrich-Hertz-Institut für Nachrichtentechnik Berlin GmbH, Einsteinufer 37, D-1000 Berlin 10 (DE)**

(72) Erfinder: **Weber, Jens, Dr., Wustermarker Strasse 95, D-1000 Berlin 20 (DE)**
Erfinder: **Kreutzer, Heinrich W., Zimmermannstrasse 17, D-1000 Berlin 41 (DE)**
Erfinder: **Nobis, Rolf, Adolf-Martens-Strasse 8, D-1000 Berlin 45 (DE)**

(74) Vertreter: **Wolff, Konrad, Einsteinufer 37, D-1000 Berlin 10 (DE)**

(54) **Schaltungsanordnung für Teilnehmerstationen.**

(57) In digitalen Zeitmultiplex-Nachrichtensystemen mit dezentraler Vermittlung haben die für den Anschluß der Teilnehmereinrichtungen – wie z.B. ein Datensichtgerät (DS), ein Fernsprecher (F), ein Bildgerät (Bi [F]) für Bildfernsprechen, ein Fernsehgerät (TV), ein Stereorundfunkgerät (StR) – erforderlichen Teilnehmerstationen identische Grundfunktionen mit höchster Betriebssicherheit wie auch dienstespezifische Funktionen zu erfüllen. Durch eine Modularisierung der Teilnehmerstationen in jeweils baugleiche, integrationsfähige Teilschaltungen werden für die Grundfunktionen je Anschlußstelle an ein mit hoher Bitrate betriebenes Netz ein Hochfrequenzteil (1) und für jeden Teilnehmer eine Kanalbelegungsprüfeinheit (2) sowie für jeden bei einem Teilnehmer abzuwickelnden Dienst ein aus einem Verbindungssteuerteil (3) und einem Formatwandler (4) bestehender Satz dienste-unspezifisch ausgebildeter aber dienste-spezifisch eingesetzter Teilschaltungen benötigt.

EP 0 009 461 A2

- 1 -

1.07 + 1.09/78 EP

HEINRICH-HERTZ-INSTITUT FÜR NACHRICHTENTECHNIK BERLIN GMBH

Schaltungsanordnung für Teilnehmerstationen

Die Erfindung betrifft eine Schaltungsanordnung für Teilnehmerstationen zum Anschalten von Teilnehmereinrichtungen an ein digitales Zeitmultiplex-Nachrichtennetz mit dezentraler Vermittlung.

Aus der DE - PS 19 25 604 ist eine Schaltungsanordnung für eine Teilnehmerstelle eines ringförmigen PCM-Vermittlungsnetzwerkes bekannt. Eine derartige Teilnehmerstelle besitzt mehrere Einrichtungen, die dazu dienen, ein binäres Codewort zu erzeugen, alle auf der ringförmig geschlossenen Schleife ankommenden Rufzeichen zu prüfen, im Freizustand das empfangene eigene Codewort abzuändern und über die Schleife weiter zu übertragen und schließlich festzustellen, ob ein bestimmtes Codewort, das von dieser Teilnehmerstelle ausgesandt wurde, über das andere Ende der Schleife wieder empfangen wird. Die Einrichtungen zur Prüfung der auf der Leitung eintreffenden Zeichen werden aus Schieberegistern und logischen Schaltelementen gebildet. Auf der schleifenförmigen Leitung wird eine Anzahl von Zeitvielfachkanälen bereitgestellt, zu denen jede Teilnehmerstelle Zugriff hat. Ist ein Zeitkanal noch unbenutzt, kann über ihn eine Verbindung aufgebaut werden. Jede Teilnehmerstelle erkennt das ihr eigentümliche Codewort auf irgendeinem Kanal und kann so eine für sie bestimmte Verbindung vervollständigen. Nachdem ein Zeitkanal für eine bestimmte Verbindung belegt wurde, bleibt dieser bis zur Auslösung für diese Verbindung belegt und kann nicht von anderen Teilnehmern belegt werden. Bei dem am o.a. Ort dargestellten und beschriebenen PCM-Vermittlungsnetzwerk sollen alle Teilnehmernummern mit einer "9" beginnen und mit einer "7" enden. Damit verbleiben 127 binäre Code-Kombinationen, d.h. die Zahl der anzuschließenden Teilnehmer ist noch geringer, da nicht alle verfügbaren Code-Kombinationen der Teilnehmernummern benutzt werden.

In "Nachrichtentechnische Zeitschrift" Jahrgang 1927 (1974, Heft 8, Seiten 283 - 291) ist ein integriertes Zeitmultiplex-Nachrichtensystem mit dezentraler Vermittlung beschrieben. Dieses bekannte Netz ist aus vielfach verzweigten Doppelleitungen aufgebaut, die in jedem Netzzweig in eine Sendeleitung und in eine Empfangsleitung mit entgegengesetzter Übertragungsrichtung unterteilt sind. Jede Teilnehmerstation ist mit der Sende- und mit der Empfangsleitung des Netzzweiges verbunden, wobei die von ihr ausgehenden Nachrichten nur auf der Sendeleitung ausgesendet und die für sie bestimmten Nachrichten nur von der Empfangsleitung entgegengenommen werden. Die von einer Teilnehmerstation empfangenen und für sie bestimmten Nachrichten werden nicht aus dem Nachrichtenstrom herausgenommen, sondern im Vorbeifließen erkannt und ausgewertet. Alle im gesamten Netz ausgesendeten Nachrichten gelangen über die in jedem Knoten des Netzes miteinander verbundenen Sendeleitungen und über eine Stelle des Netzes, an der als einziger im gesamten Netz die Sendeleitung und die Empfangsleitung miteinander verbunden sind, über die ebenfalls in jedem Netzknoten miteinander verbundenen Empfangsleitungen als Summe an alle Teilnehmerstationen. Diesen ist damit das Belegungsmuster der Zeitplätze in jedem Augenblick bekannt, so daß individuell festgestellt werden kann, ob freie Zeitplätze für den Aufbau einer neuen Verbindung vorhanden sind.

Den einzelnen Diensten dieses bekannten Nachrichtensystems können entsprechend ihrem Bandbreitenbedarf Zeitplätze in festen Bereichen des Zeitmultiplexrahmens zugeordnet werden. Für Wählverbindungen, z.B. Fernsprechen, Bildfernsprechen, Datenübertragung stehen dann also bestimmte Zeitplätze zur Verfügung, andere sind öffentlichen, festgeschalteten Verbindungen, z.B. für Hörrundfunk, Fernsehen, Normalzeit, wiederum andere Zeitplätze für nichtöffentliche, festgeschaltete Verbindungen vorbehalten. Im Dialogverkehr werden für den Hin- und Rückweg einander festzugeordnete Zeitplätze zusammengefaßt, so daß beim Belegen eines freien Zeitplatzes für den Aufbau einer Verbindung in der einen Richtung gleichzeitig ein zugehöriger Zeitplatz für die andere Richtung reserviert ist.

Unter dem Gesichtspunkt, die Einrichtungen in einer Teilnehmerstation dem Diensteangebot des Nachrichtensystems schrittweise anzupassen, ist es aus "Rundfunktechnische Mitteilungen" Jahrgang 20 (1976) Heft 5, Seiten 173 ff, insbesondere Seite 178/9 bekannt, bei einem Zweiweg-Kabelfernsehsystem die Teilnehmereinrichtung modular aufzubauen. Für die in einem solchen Netz verteilten Hörrundfunk- und Fernsehprogramme und individuell zwischen Teilnehmern und Kabelfernsehzentrale auszutauschenden Nachrichten soll eine solche modular aufgebaute Teilnehmerstation ein Modem (Modulator-Demodulator), eine Steuerung mit Mikroprozessor, einen Adressencoder und -decoder und einen Zwischenspeicher in sich vereinigen. Durch Integration eines Vorsatzkonverters und eines Descramblers kann die Kanalbelegung erfaßt und - von der Zentrale ferngesteuert - ein individueller Fernsehkanal freigegeben bzw. gesperrt werden.

In Zeitmultiplexsystemen mit dezentraler Vermittlung besitzen die Teilnehmerstationen in technischer und damit auch in betriebstechnischer und wirtschaftlicher Hinsicht besondere Bedeutung. Sie müssen an Stellen des Netzes, bei hoher Teilnehmerdichte also an sehr vielen Stellen, völlig identische Funktionen mit höchster Betriebssicherheit erfüllen. Dementsprechend entfällt ein erheblicher Anteil der gesamten Anlagenkosten auf diese dezentral vermittelnden Teilnehmerstationen. Sie sind außerdem so zu konzipieren, daß Ausbau- und Erweiterungsvorhaben sowohl hinsichtlich der anzubietenden Dienste, der von den einzelnen Teilnehmern in Anspruch genommenen Dienste als auch hinsichtlich des nachträglichen Anschlusses weiterer Teilnehmer an das Netz durchgeführt werden können, ohne daß gleichzeitig bereits vorhandene Einrichtungen geändert werden müßten.

Die der Erfindung zugrunde liegende Aufgabenstellung besteht danach darin, die Gesamtheit der von einer Teilnehmerstation, auch bei Erweiterungen hinsichtlich der angebotenen Dienste und insbesondere hinsichtlich der Zahl der an einer Stelle an das Netz angeschlosse-

- 4 -

nen Teilnehmer unabhängig von der Struktur des Netzes zu erfüllenden Einzelaufgaben so aufzuteilen, daß eine möglichst geringe Zahl von Teilschaltungen benötigt wird, mit denen die Grundfunktionen erfüllt werden und die den individuellen Gegebenheiten entsprechend lediglich durch einzelne vor- bzw. nachzuschaltende Baugruppen zu ergänzen sind. Gemäß der Erfindung ist eine Schaltungsanordnung für Teilnehmerstationen gekennzeichnet durch innerhalb einer Teilnehmerstation voneinander für die Sende- und die Empfangsrichtung getrennte Leitungen und in sich abgeschlossene für bestimmte Funktionen baugleiche Einheiten, nämlich:

- eine Kanalbelegungsprüfeinheit für jede Teilnehmerstation und
- eine aus einem Verbindungssteuerteil und einem Formatwandler gebildete Gruppe für jede Teilnehmereinrichtung.

Die Kanalbelegungsprüfeinheit ist mit Zeitplatzzählern für die Sende- und die Empfangsrichtung und mit einem Detektor für freie Zeitplätze sowie mit einem Vergleicher für die Erkennung der eigenen Teilnehmeradresse ausgerüstet. Der Verbindungssteuerteil dient dem Aufbau, der laufenden Kontrolle und der Auslösung einer Verbindung sowie der ordnungsgemäßen Abwicklung der Datenübertragung während einer bestehenden Verbindung. Mit dem Formatwandler werden die für die Endgeräte spezifischen Wortstrukturen für die Übertragung angepaßt. Kanalbelegungsprüfeinheiten sind völlig baugleich und enthalten lediglich beim Vergleicher für die Erkennung der eigenen Teilnehmeradresse einen auf diese individuelle Adresse eingestellten Speicher. Verbindungssteuerteil und Formatwandler sind unabhängig von den Diensten bzw. den Teilnehmereinrichtungen, für die sie eingesetzt werden, völlig baugleich und lassen sich für den betreffenden Zweck z.B. fest programmieren oder auch allein durch die Anschaltung der Teilnehmereinrichtung auf die gewünschte Funktion einstellen. Der wesentliche Vorteil der Erfindung ist darin zu sehen, daß diese Grundausstattung für eine Teilnehmerstation unabhängig davon benötigt wird, ob das digitale Zeitmultiplex-Nachrichtennetz mit einer ringförmigen Übertragungsleitung oder mit einer unverzweigten Doppelleitung aufgebaut ist. Für Netze, die mit einer höheren Übertragungsgeschwindigkeit auf der die einzelnen Teilnehmerstationen verbindenden Leitung als in der Teilnehmerstation selbst arbeiten, können bei Ausführungsformen der Erfindung Geschwindigkeitsumsetzer

zwischen der Übertragungsleitung und den Teilnehmerstationen vorgesehen werden, die allen an eine Ein-/Auskoppelstelle des Netzes angeschalteten Teilnehmerstationen gemeinsam sind und Parallel-/Serienwandler bzw. Serien-/Parallelwandler für die Sende- bzw. Empfangsrichtung enthalten. Ausführungsformen der Erfindung dieser Art kommen insbesondere dann zum Einsatz, wenn die die Teilnehmerstationen verbindende Übertragungsleitung sehr lang ist, d.h. innerhalb eines Anschlußbereiches durch das gesamte Einzugsgebiet dieses Bereiches verläuft.

Wie bereits aus den oben zum Stand der Technik behandelten Druckschriften bekannt ist, wird bei digitalen Zeitmultiplex-Nachrichtennetzen mit Systemen gearbeitet, dei denen auch die für die Rahmenstruktur charakteristischen und zur Synchronisierung benötigten Signale auf der Übertragungsleitung für die Nutzinformation geführt werden. An den Ein-/Auskoppelstellen des Netzes sind deshalb auch bei Ausführungsformen der Erfindung Einrichtungen zur Rückgewinnung dieser Signale vorzusehen. Diese Einrichtungen sind ebenfalls allen an eine Ein-/Auskoppelstelle des Netzes angeschalteten Teilnehmerstationen gemeinsam und befinden sich zwischen diesen Teilnehmerstationen und der Übertragungsleitung.

Besonders vorteilhafte Ausführungsformen der Erfindung können aufgrund der baugleichen Ausführung von Verbindungssteuerteilen mit Querverbindungen zwischen Verbindungssteuerteilen für Teilnehmerrichtungen gleicher Bandbreitenklasse versehen werden. Solche Querverbindungen ermöglichen eine alternative Nutzung von Verbindungssteuerteilen, d.h., ist für einen bestimmten Dienst bereits eine Verbindung hergestellt, kann über den zweiten Verbindungssteuerteil über die Querverbindung eine zweite, zusätzliche Verbindung für den gleichen Dienst - z.B. eine Rückfrageverbindung - aufgebaut und unterhalten werden.

Bei herkömmlichen Fernmeldenetzen sind die Teilnehmeranschlußleitungen durchschnittlich 1.300 m lang. Sie führen von einer zentralen Stelle innerhalb des Anschlußbereichs z.B. von einer Vermittlungsstelle zu den Endstellen. Während der Einführungsphase neuer Nachrichtensysteme können bei Ausführungsformen der Erfindung diese

0009461

Teilnehmeranschlußleitungen weiter verwendet werden, wenn man für jede an eine Teilnehmerstation angeschlossene Teilnehmereinrichtung eine Leitungsanpassungseinheit vorsieht. Die Teilnehmerstationen einschließlich der Leitungsanpassungseinheit und der Einrichtungen für die Versorgung der Teilnehmereinrichtungen können dann an der bisherigen zentralen Stelle des Anschlußbereiches untergebracht und angeordnet werden. In diesem Falle reduziert sich die Länge der die Teilnehmerstationen verbindenden Übertragungsleitung erheblich. Sie führt nämlich lediglich durch das Gebäude, in dem sich die Teilnehmerstationen zentralisiert befinden. Unter diesen Voraussetzungen kann es vorteilhaft sein, auf der die Teilnehmerstationen verbindenden Übertragungsleitung mit keiner erhöhten Übertragungsgeschwindigkeit zu arbeiten. Aufgrund der kurzen Länge der Übertragungsleitung ist der technische und wirtschaftliche Aufwand für parallel verlaufende Übertragungsleitungen in vielen Fällen durchaus geringer als für Geschwindigkeitsumsetzer, auch wenn diese mehreren Teilnehmerstationen gemeinsam sein können. Diese Überlegungen treffen umsomehr für Systeme zu, die neben der Übertragungsleitung für die Nachrichten über parallellaufende Leitungen für die Zuführung von Bittakt, Worttakt und Rahmentakt zu den Teilnehmerstationen verfügen.

In diesem Zusammenhang ist insbesonedere auf die Möglichkeit hinzuweisen, ein solches Zeitmultiplex-Nachrichtennetz als Nebenstellenanlage einzusetzen. Zum Übergang in das öffentliche Netz muß in diesem Fall an die Stelle einer Teilnehmerstation eine Überleitungseinrichtung gesetzt werden. Die einzelnen an die Nachrichtenübertragungsleitung dieses Nebenstellennachrichtennetzes angeschlossenen Teilnehmerstationen können dabei so aufgebaut sein, wie für die einzelnen Ausführungsformen der Erfindung oben beschrieben ist. Zusätzlich lassen sich ohne Schwierigkeit bei den Teilnehmerstationen solche elektronischen Baugruppen ergänzen, mit denen die sonst bei Nebenstellen üblichen Dienste bereitgestellt werden.

Schaltungsanordnungen für Teilnehmerstationen gemäß der Erfindung erfüllen nicht nur Vermittlungs-, sondern auch Konzentratorfunktionen. Die Konzentratorfunktionen sind sicherheitstechnisch bedingt. Da die elektronischen Einrichtungen teilnehmerfern angeordnet werden können, sind unbefugte Manipulationen durch den Einzelteilnehmer ausgeschlossen. Außerdem erhöht sich die Ausfallsicherheit, da es nur wenige Ein-/Auskoppelstellen im Netz gibt. Hiermit hängt auch eine einfachere Wartbarkeit zusammen, da die betreffenden elektronischen Baueinheiten außerhalb des Bereiches angeordnet sind, der nur mit Zustimmung des Teilnehmers zugänglich ist. Die bei Systemen ohne getrennte Leitungen für die Taktversorgung erforderlichen Einheiten, also Geschwindigkeitsumsetzer und Einheiten für die Taktrückgewinnung und Synchronisierung sind so ausgelegt, daß dort nur der Teil der Gesamtheit aller Einzelaufgaben erfüllt wird, der unabhängig von der Vielfalt der einzelnen Dienste und von der Zahl der an einer Ein-/Auskoppelstelle befindlichen Teilnehmerstationen anfällt. Diese Einzelaufgaben sind also sowohl im Hinblick auf die einzelnen Dienste als auch auf die Zahl der Teilnehmerstationen noch unspezifisch. Funktionsmäßig folgt daraus für jede angeschlossene Teilnehmerstation ein teilnehmerspezifischer aber diensteunspezifischer Modul, die Kanalbelegungsprüfeinheit. Dort werden für den betreffenden Teilnehmer - in seiner Eigenschaft als rufender oder als gerufener Teilnehmer - die für die einzelnen Verbindungen benötigten dezentral vermittelten Kanäle beobachtet, d.h. es wird festgestellt, ob ein Kanal frei ist, ob ein Kanal für eine Verbindung mit dem betreffenden Teilnehmer belegt oder durch andere Teilnehmer besetzt ist. Die Module, mit denen funktionsmäßige Einzelaufgaben erfüllt werden, sind jeweils einer Art von Endgeräten zugeordnet, jedoch diensteunspezifisch ausgebildet. Das bedeutet, jedem Teilnehmer werden je nach Art der bei ihm betriebenen Endgeräte jeweils baugleiche Sätze solcher Module in seine Teilnehmerstation eingesetzt. Dem Teilnehmer bleibt der Ausbaugrad offen, d.h. er kann jederzeit entscheiden, ob er nur ein Endgerät, z.B. Fernsprecher, Fernseher, oder mehrere davon parallel betreiben will. Selbstverständlich können - sofern Kanäle dafür gefunden werden - von den verschiedenartigen Endgeräten eines Teilnehmers gleichzeitig Verbindungen mit entsprechenden Endgeräten anderer Teilnehmer bestehen.

Für die Ausführungsformen der Erfindung gilt allgemein, daß in einem digitalen Zeitmultiplex-Nachrichtennetz ein einheitlicher Übertragungstakt und ein einheitlicher Zeitmultiplexrahmen herrscht, die von einem Zeitrahmengenerator erzeugt werden, der periodisch eine Folge der Zeitplätze und einen zugehörigen Synchronisierblock sendet. Diese Synchronisierinformation, die jede Teilnehmerstation sowohl für die Sende- als auch für die Empfangsrichtung benötigt, gelangt vom Zeitrahmengenerator entweder über separate Steuerleitungen oder über die Sende- und Empfangsleitungen sowie gegebenenfalls über Synchroninformations-Reflektoren an den Enden von Netzzweigen bis an die einzelnen Teilnehmerstationen. Jeder Zeitplatz im Zeitmultiplexrahmen auf der Empfangsleitung ist damit identisch mit dem betreffenden Zeitplatz gleicher Ordnungsnummer auf der Sendeleitung. Für die Dauer einer Verbindung dient die Ordnungsnummer eines Zeitplatzes als Verbindungskriterium, so daß nach dem Aufbau einer Verbindung keine gesonderte Kennzeichnung der ausgesendeten Nachrichten mit der Zieladresse erforderlich ist.

Um die Nachrichten und Signale mit dem Übertragungstakt im richtigen Zeitplatz zu senden bzw. zu empfangen und aus den einzelnen Endgeräten zusammenzufassen bzw. an sie zu verteilen, sind also eine Bit-, Zeitplatz- und Rahmensynchronisierung für die Sende- und Empfangsleitung, eine abwechselnde Speicherung jeweils des Inhalts des ganzen empfangenden Zeitplatzes, eine Erkennung der Rufe oder Signale, eine Weitergabe der für den Teilnehmer bestimmten Nachrichtenblöcke, die Aussendung von Nachrichten- und Signalblöcken, der Empfang von Synchronisierblöcken für die Rahmensynchronisierung und eine Speicherung auszusendender Nachrichten durchzuführen. Für den gesamten Ablauf zum Aufbau und Auslösen einer Verbindung unter Berücksichtigung der verschiedenen Dienste und Leistungsmerkmale wird ein Programm benötigt, das sich entsprechend den manuell eingegebenen oder den über die Empfangsleitung aufgenommenen Signalen in unterschiedliche Wege verzweigt.

Das Weitervermitteln bzw. Umleiten einer bestehenden oder einer herzustellenden Verbindung zu einem anderen Teilnehmer ist bei herkömmlicher - zentraler - Vermittlungstechnik, insbesondere bei Nebenstellenanlagen möglich und teilweise in erheblichem Umfang üblich. Zur Konkurrenzfähigkeit von Systemen mit dezentraler Vermittlung trägt bei, wenn den Teilnehmern solche bekannten Leistungsmerkmale in gleicher oder komfortablerer Weise geboten

- 9 -

werden können.

Ein wesentlicher Schritt in dieser Richtung wurde von der Hasler AG in Bern (Schweiz) bei deren Laborsystem für integrierte örtliche Kommunikation beschritten. Aus dem "Bericht 148 des Int. Switching Symp. - ISS'74 - München, 9. bis 13. September 1974" geht hervor, daß dort bei einem System mit einer geschlossenen Ringleitung und dezentraler Vermittlung auch Leistungsmerkmale wie Rückfrageverbindung (call back), Klopfen (call indication) und Umlegen von Verbindungen (call transfer) einbezogen worden sind. Während im einleitenden Teil des o.a. Berichtes - Blatt 148/1 rechte Spalte, 2. Absatz - ausgeführt wird, jede Teilnehmerstation könne ohne Mitwirkung einer zentralen Steuereinheit Verbindungen aufbauen und auslösen, wobei auch die oben erwähnten Leistungsmerkmale einbegriffen seien, geht bezüglich des Umlegens von Verbindungen - Blatt 148/2 und /3, letzter Absatz des Abschnitts 3 - genauer hervor, daß dieses Leistungsmerkmal nur für Amtsverbindungen (external calls) realisiert wurde und zusätzliche Funktionen bei einer Überleitstation (interface station) erforderlich macht. Diese Überleitstation I muß dazu wie eine Teilnehmerstation im Ring mit drei Adress-Registern (S - sending address register; R - receiving address register; A - auxiliary/additional address register) ausgerüstet sein. Von diesen Registern werden für einfache Verbindungen, bei denen zwischen zwei Teilnehmern im Ringnetz Nachrichten in Form von Datenblöcken ausgetauscht werden, die die betreffenden Adressen enthalten, nur das S- und das R-Register benötigt. Die A-Register dienen zur Abwicklung der infragestehenden Leistungsmerkmale und übernehmen durch Betätigen der von modernen Anwahltastaturen her bekannten Tasten ✳ (Stern) oder rot und ⧣(Raute) oder grün die in R-bzw. S-Registern stehenden Adressen.

Eine weitere bevorzugte Ausführungsform der Erfindung ist deshalb darauf ausgerichtet, bei deren Schaltungsanordnungen für Teilnehmerstationen unter weitgehender Verwendung der vorgesehenen Module und den bei Teilnehmereinrichtungen üblichen Mitteln Leistungsmerkmale wie Umlegen von Verbindungen, Umleiten und Weiterschalten von Rufen zu ermöglichen. Dies wird erreicht durch einen zusätzlichen Verbindungssteuerteil und einen Speicherregistersatz sowie Schalteinrichtungen für eine Teilnehmereinrichtung zum Aufbau und zur Unterhaltung einer gleichzeitigen zweiten Verbindung bzw. zur Weitervermittlung der ersten auf die zweite Verbindung. Ein Teilnehmer B, der eine Verbindung mit einem Teilnehmer A mit jeweils einem Hin- und einem Rückkanal in Form von zwei einander fest zugeordneten Zeitplätzen eines Zeitmultiplexrahmens unterhält, kann dadurch - ohne die Verbindung zum Teilnehmer A auszulösen - mit einem dritten Teilnehmer C z.B. in Rückfrageverbindung treten. Hierfür werden zwei andere Zeitplätze benötigt, die über den zusätzlichen Verbindungssteuerteil durchgeschaltet werden. Will der Teilnehmer C das Gespräch mit dem Teilnehmer A übernehmen, erfolgt über den Speicherregistersatz beim Teilnehmer B ein Informationskurzschluß, wobei je eine Zelle des Speicherregistersatzes die vom Teilnehmer A kommenden Zeitplatzinhalte an den Teilnehmer C weiterleitet und umgekehrt. Das bedeutet, unter Ausschluß des Formatwandlers und der Teilnehmereinrichtung beim Teilnehmer B werden bei diesem die von den Teilnehmern A und C eintreffenden Informationen zwischengespeichert und an die Teilnehmer C und A ausgesendet.

Alle Leistungsmerkmale, die hierauf zurückgeführt werden können, lassen sich durch entsprechende Zusammensetzung der einzelnen Stufen nach diesem Prinzip realisieren. Dabei ist nach wie vor gewährleistet, daß kein unbefugter Teilnehmer Zugriff auf nicht für ihn bestimmte Informationen hat. Ein wesentlicher Vorteil dieser Ausführungsform der Erfindung liegt darin, daß für die Abwicklung dieser Leistungsmerkmale keine zentrale Einrichtung benötigt wird und diese deshalb insbesondere bei solchen dezentral vermittelnden Systemen eingesetzt werden können, wo keine zentrale Einrichtung vorgesehen ist. Dieses Prinzip ist damit unabhängig von der Struktur eines dezentral vermittelnden Netzes und erlaubt die Abwicklung der infragestehenden Leistungsmerkmale nicht nur in Nebenstellenanlagen, sondern im gesamten entsprechend ausgerüsteten Netz.

- 11 -

Nähere Einzelheiten der Erfindung werden im Zusammenhang mit den in der Zeichnung schematisch dargestellten Ausführungsformen erläutert; dabei zeigen:

Fig. 1: ein Blockschaltbild einer Teilnehmerstation,

Fig. 2: ein Blockschaltbild eines Hochfrequenzteiles, bestehend aus Geschwindigkeitsumsetzer und Einrichtungen zur Taktgewinnung und Synchronisierung,

Fig. 3: ein Blockschaltbild einer für jeden Teilnehmer benötigten Kanalbelegungsprüfeinheit,

Fig. 4: ein Blockschaltbild eines kanal- und teilnehmerspezifischen Verbindungssteuerteils,

Fig. 5: ein Blockschaltbild eines Formatwandlers,

Fig. 6: eine Prinzipskizze eines Netzes mit verzweigten Doppelleitungen,

Fig. 7: eine Prinzipskizze eines Netzes mit einer Sende- und Empfangsleitung und davon getrennte Leitungen zur Taktzuführung,

Fig. 8: eine Prinzipskizze eines Netzes mit parallelen Übertragungsleitungen für die Nutzinformation und davon getrennten Leitungen zur Taktzuführung,

Fig. 9: eine Prinzipskizze eines Netzes mit einer daran angeschlossenen Nebenstellenanlage,

Fig.10: eine Prinzipskizze eines Netzes mit einer Ortsvermittlungsstelle,

Fig.11: ein Blockschaltbild einer Teilnehmerstation mit zusätzlichen Einrichtungen,

und Fig.12: Ausschnitte von zwei Teilnehmerstationen gem. Fig. 11 mit für unterschiedliche Verbindungsarten besonders hervorgehobenen Einrichtungen.

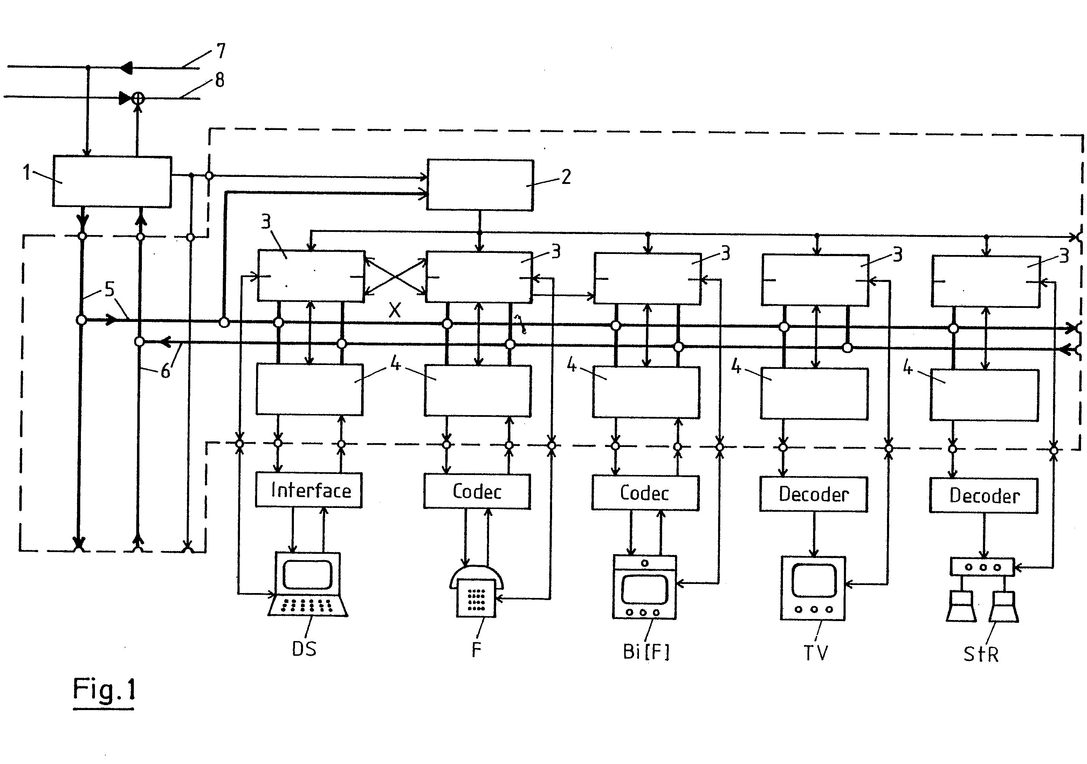

Bei dem in Fig. 1 dargestellten Blockschaltbild einer Teilnehmerstation sind eine Empfangsleitung 7 und eine Sendeleitung 8 für serielle Daten eines Netzes mit Doppelleitungen dargestellt, die verzweigt oder unverzweigt sein können und gleichzeitig zur Taktversorgung dienen. Zwischen diesen Leitungen 7 und 8 und der Teilnehmerstation ist deshalb ein Hochfrequenzteil 1 vorzusehen, der in der dargestellten Ausführungsform mit Geschwindigkeitsumsetzern und Einrichtungen zur Taktrückgewinnung und zur Synchronisierung ausgerüstet ist. Dieser Hochfrequenzteil 1 kann ganz oder teilweise entfallen, wenn die Daten auf der Sende- und Empfangsleitung mit gegenüber der internen Arbeitsgeschwindigkeit der Teilnehmerstation unveränderter Geschwindigkeit geführt und für die Taktversorgung der Teilnehmerstation getrennte Leitungen vom Zeitrahmengenerator herangeführt werden. Von den Einrichtungen zur Taktrückgewinnung werden für die Sende- und Empfangsrichtung die Wort- und Rahmentakte bestimmt, mit denen die nachfolgenden Einheiten gesteuert werden.

Die von der Empfangsleitung 7 auf den internen Empfangsdatenbus 5 übernommenen Signale werden in der Kanalbelegungsprüfeinheit 2 auf das Vorhandensein freier Zeitplätze geprüft sowie daraufhin untersucht, ob die betreffende Teilnehmerstation gerufen wird. Sie erkennt dies durch Vergleich der eigenen individuellen Rufnummer mit den über den Empfangsdatenbus 5 einlaufenden Zieladressen. Innerhalb der Teilnehmerstation sind an den Empfangsdatenbus 5 und den Sendedatenbus 6 die für die einzelnen Dienste baugleichen, jedoch dienstespeziell eingesetzten Einheiten angeschlossen. Diese Einheiten bestehen jeweils aus einem Verbindungssteuerteil 3 und einem Formatwandler 4. Zwischen Verbindungssteuerteilen 3 gleicher Bandbreitenklasse können Querverbindungen X vorgesehen sein. Beim dargestellten Ausführungsbeispiel sind ein Datensichtgerät DS, ein Fernsprecher F, ein Bildgerät Bi (F) für Bildfernsprechen, ein Fernsehgerät TV und ein Stereorundfunkgerät StR angeschlossen. Diese Endgeräte sind mit zugehörigem Interface bzw. Codec (Coder/Decoder) bzw. Decoder versehen und befinden sich in nicht allzu großer Entfernung von der Teilnehmerstation, so daß alle erforderlichen Leitungen von der Teilnehmerstation zum betreffenden Endgerät parallel herangeführt werden können. Diese Teilnehmerstation läßt sich für weitere Dienste auf einfache Weise dadurch erweitern, daß entsprechende Verbindungssteuerteile 3 und Formatwandler 4 angefügt werden. Außerdem besteht die Möglichkeit, weitere Teilnehmerstationen an die zum Hochfrequenzteil 1 führenden Leitungen 5 und 6 anzuschließen (Konzentrator).

- 13 -

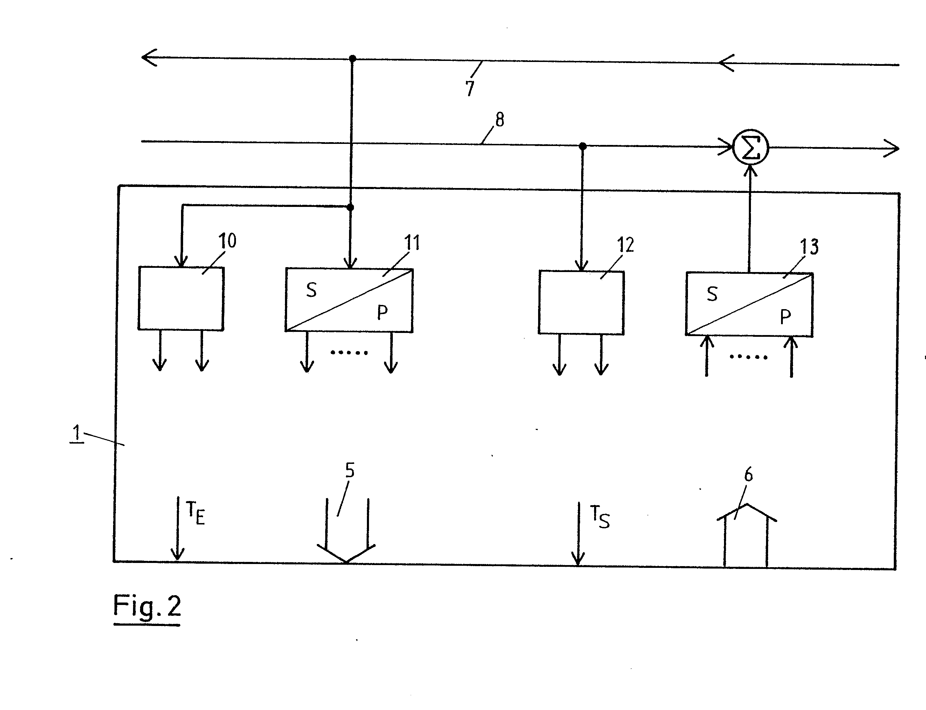

Der in Fig. 2 als Blockschaltbild dargestellte Hochfrequenzteil 1 ist mit Einrichtungen für eine Geschwindigkeitsumsetzung und für die Taktrückgewinnung, d.h. also in der dargestellten Ausführungsform maximal ausgerüstet. So sind z.B. eine Synchronisierungseinheit 10 für die Empfangsrichtung und eine Synchronisierungseinheit 12 für die Senderichtung vorgesehen, die die zugehörigen Signale (Bit-, Wort- und Rahmentakte) $T_E$ und $T_S$ von den Daten der Empfangsleitung 7 bzw. der Sendeleitung 8 ableiten. Diese Einheiten können entfallen, wenn von dem Zeitrahmengenerator des Netzes diese Signale über getrennte Leitungen direkt an die Teilnehmerstationen herangeführt werden. Zwischen der Empfangsleitung 7 und dem Empfangsdatenbus 5 sowie zwischen der Sendeleitung 8 und dem Sendedatenbus 6 sind jeweils ein Serien-Parallel-Wandler 11 bzw. Parallel-Serien-Wandler 13 vorgesehen. Die durch diese Wandler herbeigeführte Geschwindigkeitsumsetzung kann dann entfallen, wenn auf der Empfangsleitung 7 bzw. Sendeleitung 8 die Daten nicht seriell sondern parallel mit derselben Geschwindigkeit wie auf dem Sendedatenbus 6 bzw. Empfangsdatenbus 5 geführt werden.

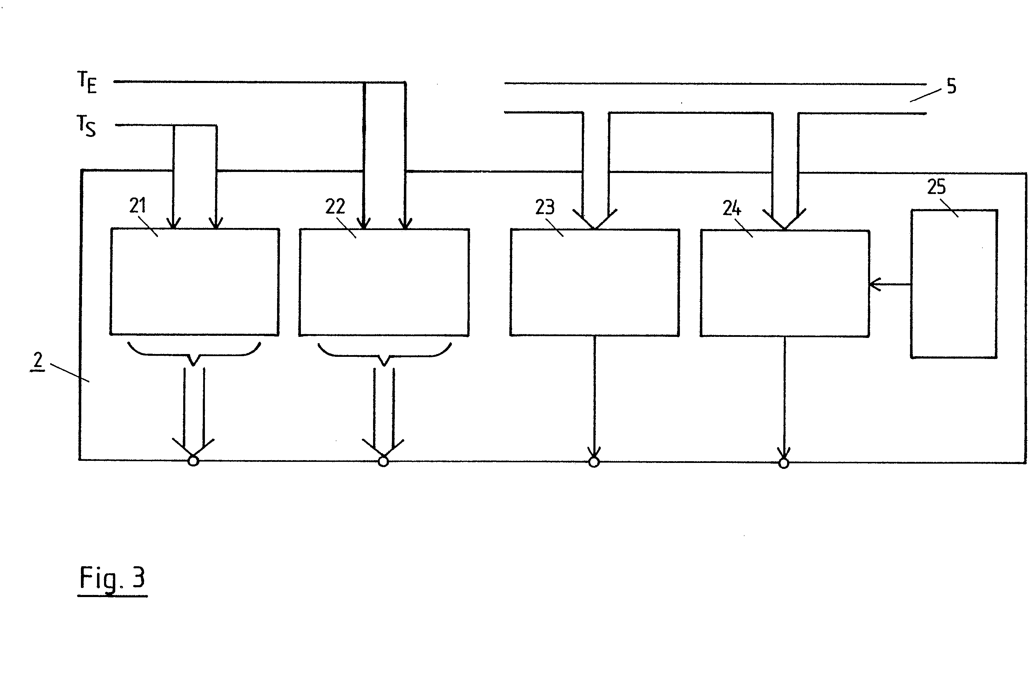

Aus Fig. 3, dem Blockschaltbild für die Kanalbelegungsprüfeinheit 2, ist deren prinzipieller Aufbau zu erkennen. Mit einem Zeitplatzzähler 21 wird dort für die Sendeseite mit Hilfe des Wort- und des Rahmentaktes die Ordnungsnummer der Zeitplätze bestimmt. Ein entsprechend ausgebildeter Zeitplatzzähler 22 dient der gleichen Funktion auf der Empfangsseite. Aus den über den Empfangsdatenbus 5 einlaufenden Daten wird mit einem Detektor 23 erkannt, ob sich freie Zeitplätze für den Aufbau einer Verbindung im Zeitrahmen befinden. Ein Vergleicher 24, an den ein Speicher 25 angeschlossen ist, der die Rufnummer des betreffenden Teilnehmers enthält, dient zur Erkennung eines an die betreffende Teilnehmerstation gerichteten Rufes.

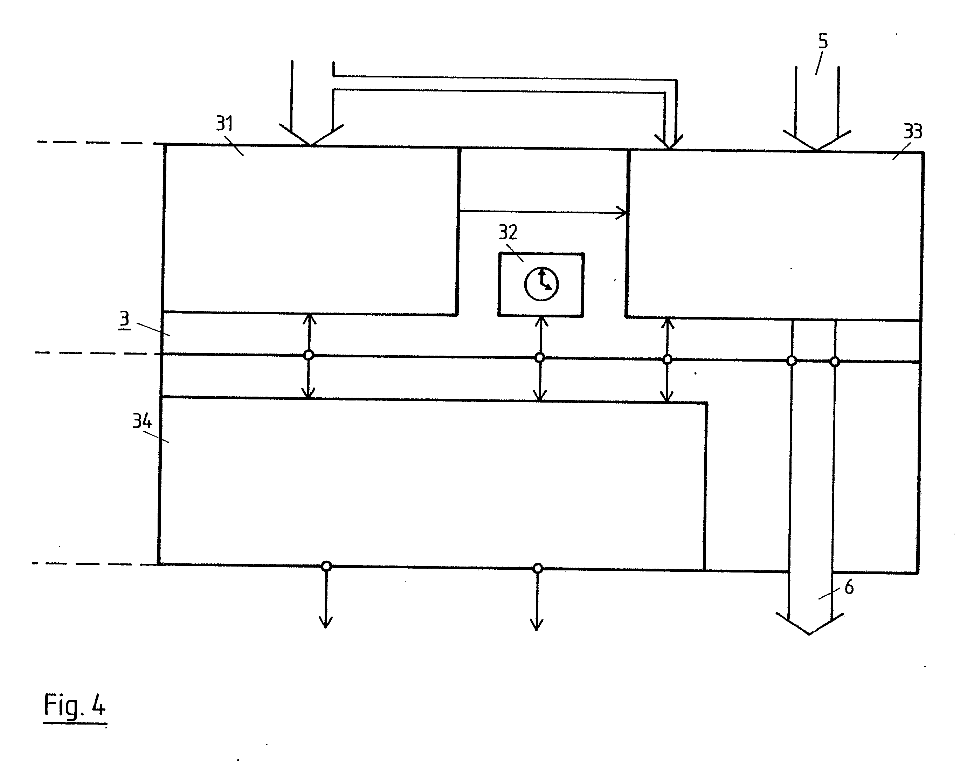

Der Verbindungssteuerteil 3 besteht gemäß Fig. 4 im wesentlichen aus vier Teilen, nämlich der Kanalverwaltung 31, dem zentralen Zeitgeber 32, der Adressverwaltung 33 und der Ablaufsteuerung 34. Die Funktionen dieser Teile werden weiter unten im Zusammenhang mit der Schilderung eines Verbindungsauf- und abbaues näher erläutert.

- 14 -

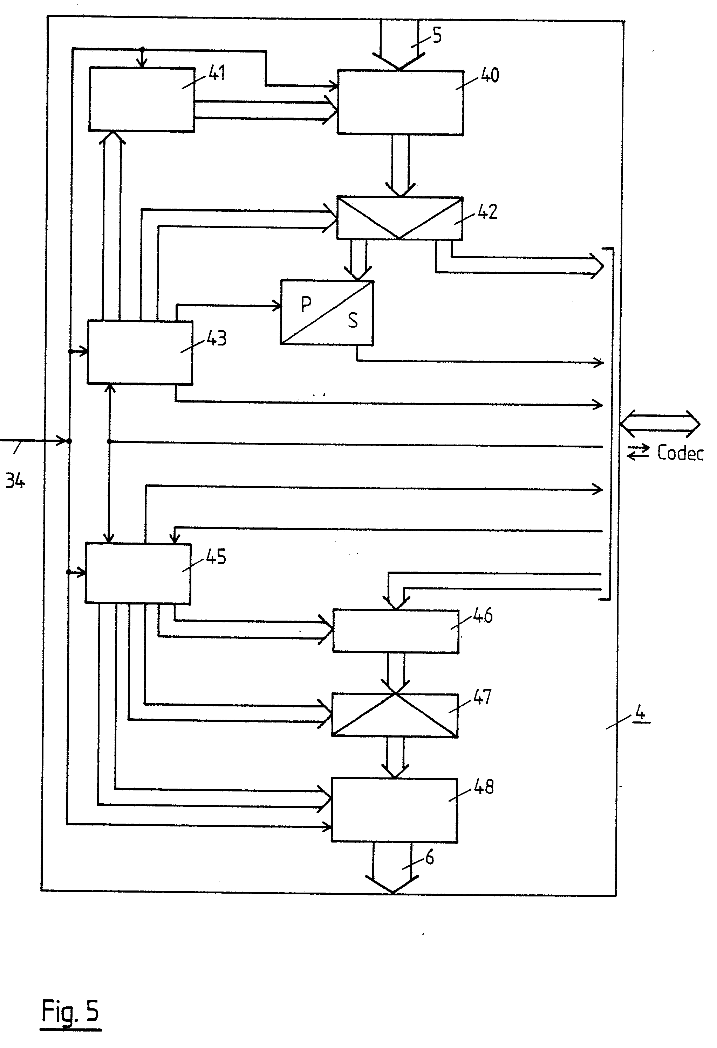

Ein Formatwandler 4 enthält, wie im Blockschaltbild gemäß Fig. 5 dargestellt, für die Sende- und Empfangsrichtung im wesentlichen entsprechend aufgebaute Teile. Er wird von der Ablaufsteuerung 34 (Fig. 4) bedient und hat die Aufgabe, die serien-/parallel-gewandelten Daten des Datenbusses 5 mit Hilfe eines Speichers 40 (RAM) und einer Datenumschaltung 42 in äquidistante Bitgruppen umzuwandeln, deren Breite von außen durch Programmierung der Steuerung 43 in Verbindung mit der Speicher-Adressierung 41 entsprechend dem verwendeten Codec bestimmbar ist. In analoger Weise werden sendeseitig die durch den verwendeten Codec vorgegebenen Bitgruppen der Sendedaten vom Coder über ein Pufferregister 46, eine sendeseitige Datenumschaltung 47 und einen Speicher 48 (RAM) mit Hilfe einer Steuerung 45 in die für den sendeseitigen Datenbus 6 erforderlichen Bitgruppen, z.B. à 16 Bit, umgewandelt.

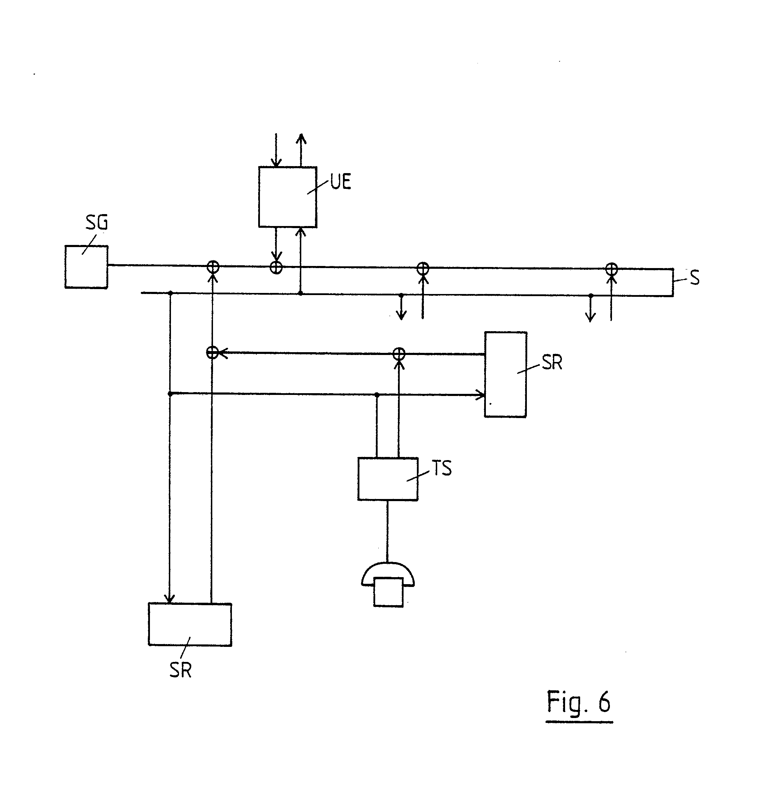

Die Figuren 6, 7, 8 und 9 zeigen unterschiedliche Möglichkeiten für den Aufbau von digitalen Zeitmultiplex-Nachrichtennetzen. Beim Netz gemäß Fig. 6 ist eine mehrfach verzweigte Doppelleitung vorgesehen, wobei sich an den Verzweigungsenden sogenannte Synchroninformationsreflektoren SR befinden. Der Strang, von dem die Enden abzweigen, besitzt am Anfang der Sendeleitung den Synchrongenerator SG, der das Netz mit dem einheitlichen Zeitrahmen und den Takten versorgt. Das andere Ende dieser Sendeleitung ist an der Stelle S mit dem Anfang der parallellaufenden Empfangsleitung kurzgeschlossen, so daß alle im Netz ausgesendeten Nachrichten an allen Stellen empfangen werden können. Die an beliebigen Stellen des verzweigten Netzes befindlichen Teilnehmerstationen TS gemäß der Erfindung sind mit einem Hochfrequenzteil 1 versehen, der sowohl mit einer Einrichtung zur Geschwindigkeitsumsetzung als auch mit Einrichtung zur Taktrückgewinnung und zur Synchronisierung der Einheiten der Teilnehmerstationen TS ausgerüstet ist. Ebenfalls an beliebiger Stelle des Netzes läßt sich, ähnlich wie eine Teilnehmerstation, eine Überleiteinrichtung UE anschließen, über das Verbindungen zu anderen Anschlußbereichen vermittelt werden können.

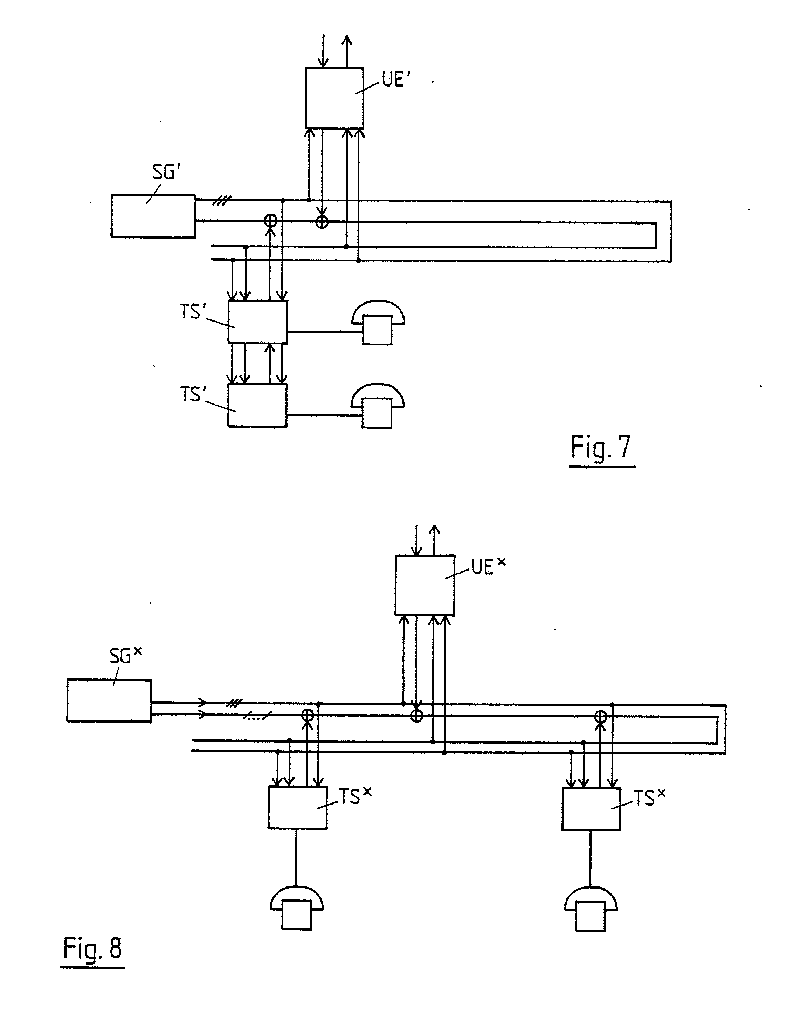

Bei dem in Fig. 7 dargestellten Netz werden zwar die Daten auf der die Teilnehmerstationen verbindenden Übertragungsleitung wie bei Fig. 6 seriell, d.h. also mit höherer Geschwindigkeit geführt, so

- 15 -

daß die Teilnehmerstationen TS' mit Einrichtungen zur Geschwindigkeitsumsetzung ausgerüstet sein müssen. Im Gegensatz zu der in Fig.
6 dargestellten Ausführung ist bei dem Netz gemäß Fig. 7 vorgesehen,
Rahmen-, Wort- und Bittakt jeweils über eigene getrennte Leitungen
vom Synchrongenerator SG' den einzelnen angeschlossenen Teilnehmerstationen TS' zuzuführen. Bei einem nach diesem System aufgebauten
Netz sind parallel zur Übertragungsleitung für die Nutzinformation
drei Signalisierungsleitungen zu verlegen. Hierfür werden bei den
Teilnehmerstationen TS' Einrichtungen zur Rückgewinnung der für die
Rahmenstruktur charakteristischen und zur Synchronisierung benötigten Signale eingespart.

Eine weitere Ausführungsform zeigt Fig. 8. Sie unterscheidet sich
von der in Fig. 7 dargestellten Ausführungsform dadurch, daß die
Nutzinformationen nicht seriell, d.h. nicht über eine einzige Übertragungsleitung, sondern parallel, d.h. über einen entsprechend
breiten Datenbus den einzelnen angeschlossenen Teilnehmerstationen
$TS^X$ zugeführt werden. Bei diesen Teilnehmerstationen $TS^X$ sind demgemäß weder Geschwindigkeitsumsetzer noch Einrichtungen zur Taktrückgewinnung erforderlich. Für die Vermittlung mit anderen Anschlußbereichen können entsprechend Fig. 6 auch bei Netzen gemäß
Fig. 7 und Fig. 8 Überleiteinrichtungen UE' bzw. $UE^X$ vorgesehen
werden.

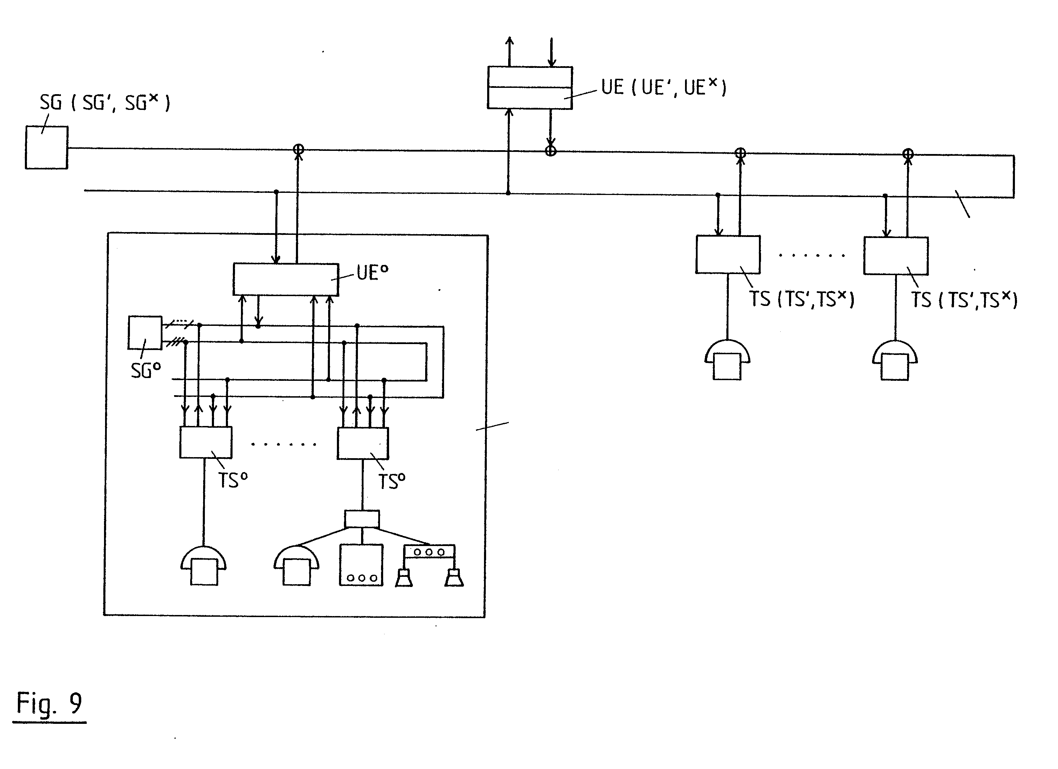

Die Fig. 9 zeigt den Anschluß einer Nebenstellenanlage, die als
digitales Zeitmultiplex-Nachrichtennetz ausgebildet und mit Schaltungsanordnungen für Teilnehmerstationen gemäß der Erfindung ausgerüstet ist. Die Nebenstellenanlage kann in ihrem inneren Aufbau gemäß den in den Fig. 6, 7 oder 8 dargestellten Netzen ausgeführt
sein.

Die auszuwählende Lösung wird wesentlich davon bestimmt, ob Teilnehmereinrichtungen bereits vorhanden sind und ob Breitbanddienste
integriert werden sollen. Die Teilnehmerstationen $TS^0$ (vgl. Fig. 1)
sind somit im wesentlichen baugleich zu denen im Ortsnetz (TS, TS',
$TS^X$) und stellen den Verkehr untereinander über ein Zeitmultiplex-
System her, das von einem Synchrongenerator $SG^0$ gespeist wird.
Externgespräche werden über eine Überleiteinrichtung $UE^0$ in das

Ortsnetz weitergegeben. Dazu erfolgt in der Überleiteinrichtung UE$^O$ eine Zeitrahmenanpassung und Zeitplatzzuordnung zwischen Nebenstelle und Ortsnetz. Zur Realisierung typischer Nebenstellen-Leistungsmerkmale, insbesondere der Umlegung von Amtsverbindungen von Nebenstelle zu Nebenstelle können Querverbindungen in den Verbindungssteuerteilen der Teilnehmerstationen herangezogen werden.

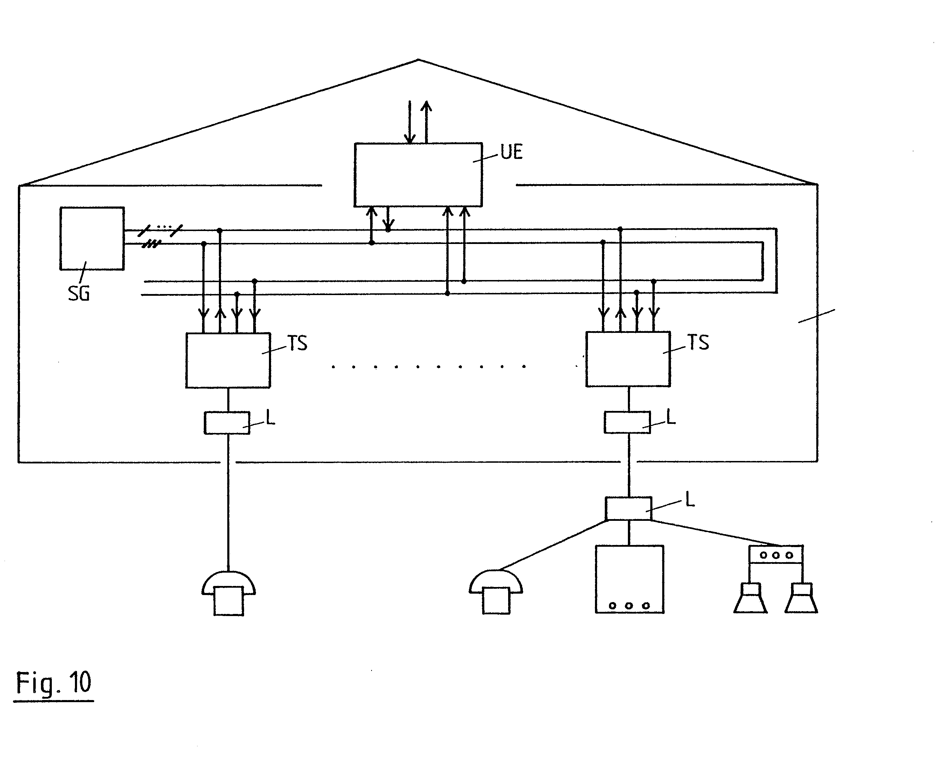

Die Fig. 10 zeigt, wie eine Ortsvermittlungsstelle mit dezentralisierter Steuerung aufgebaut werden kann. Der innere Aufbau des digitalen Zeitmultiplex-Nachrichtennetzes innerhalb der Vermittlungsstelle entspricht z.B. dem in Fig. 8 dargestellten System. Der Aufbau und die Ausbildung einer solchen Ortsvermittlungsstelle besitzt insbesondere für die Einführungsphase neuer digitaler Zeitmultiplex-Nachrichtennetze besondere Bedeutung. Es können die bereits vorhandenen Anschlußleitungen von der Vermittlungsstelle zu den Endgeräten bei den einzelnen Teilnehmern mit einer durchschnittlichen Länge von 1.300 m weiter benutzt werden, wobei in der Vermittlungsstelle hinter jeder Teilnehmerstation eine Leitungsanpassungseinheit L vorzusehen ist.

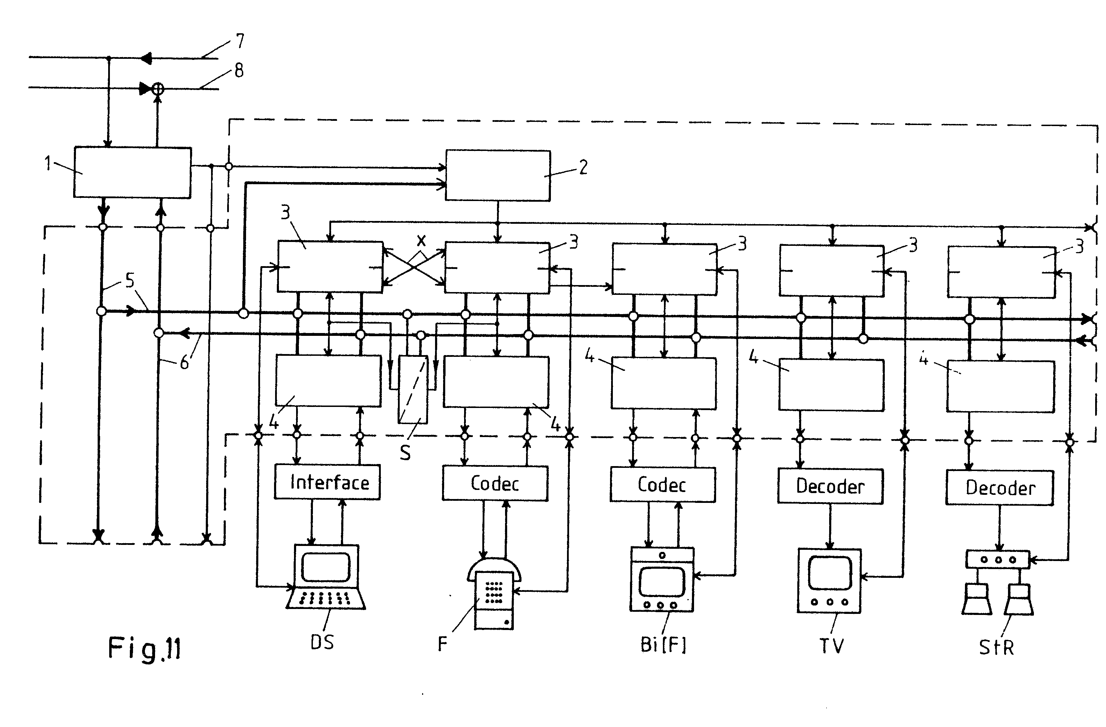

Die Fig. 11 zeigt das Blockschaltbild einer Teilnehmerstation, die weitgehend dem der Fig. 1 entspricht. Der Unterschied zwischen den Fig. 1 und 11 besteht darin, daß hier zusätzlich ein Speicherregistersatz S vorgesehen ist, der an den Empfangsdatenbus 5 und den Sendedatenbus 6 angeschlossen und mit Steuerleitungen versehen ist, die zu zwei Verbindungssteuerteilen 3 gleicher Bandbreitenklasse führen.

Normalverbindung zwischen zwei Teilnehmern
(s.a. Fig. 4)
Der Auf- und Abbau einer Normalverbindung zwischen zwei Teilnehmerstationen TS (TS', TS$^X$, TS$^O$) findet allein über die Verbindungssteuerteile 3 der betreffenden Teilnehmerstation statt. Vom betreffenden Endgerät (vgl. Fig. 1) wird die Zielwahl in einen Wahlaufnehmesatz der Ablaufsteuerung 34 übergeben. Nach abgeschlossener Wahl wird von der Kanalverwaltung 31 des Verbindungssteuerteils 3 des rufenden Teilnehmers mit Hilfe des Detektors 23 (s. Fig. 3) eine für diesen Dienst erforderliche freie Zeitlage auf dem Empfangsdatenbus 5 und auf dem Sendedatenbus 6 gesucht.

- 17 -

Eine solche freie Zeitlage ist mit einander zugeordneten freien Zeitplätzen auf der Empfangsleitung 7 bzw. Sendeleitung 8 identisch. Ist eine solche freie Zeitlage gefunden, wird sie belegt. Die Belegung erfolgt durch eine Verbindungsaufbausignalisierung. Diese Signalisierung wird aus einer Dienstekennung aus der Ablaufsteuerung 34, der Zieladresse aus dem Wahlaufnehmesatz der Ablaufsteuerung 34 und der eigenen Adresse aus dem Speicher 25 zusammengesetzt. Der belegte Zeitplatz wird in einem Zeitplatznummernspeicher der Kanalverwaltung 31 des Verbindungssteuerteils 3 des rufenden Teilnehmers gespeichert, so daß der Zeitpunkt zum Senden und zum Empfangen für die Dauer dieser Verbindung festliegt. Nach Absenden des Rufes wird innerhalb einer durch den zentralen Zeitgeber 32 festgelegten Zeit der Informationsinhalt der Quittung vom gerufenen Teilnehmer auf der Empfangszeitlage in der Adressverwaltung 33 für die Dienstekennung auf den richtigen Dienst und über einen Quittungsvergleicher in der Kanalverwaltung 31 auf die richtige Partneradresse geprüft. Außerdem findet in der Kanalbelegungsprüfeinheit 24 laufend eine Überprüfung des Datenflusses hinsichtlich der eigenen Rufadresse statt. Sind alle Ergebnisse positiv, ist der Verbindungsaufbau für den rufenden Teilnehmer - signalisierungsmäßig - hergestellt. Der rufende Teilnehmer erhält ein Freizeichen. Sind die oben angegebenen Kriterien der durch den zentralen Zeitgeber 32 festgelegten Zeit nicht erfüllt, wird die Verbindung als nicht zustande gekommen behandelt.

Im Falle des erfolgreichen Verbindungsaufbaus erfolgt der Übergang in den Gesprächszustand dadurch, daß der gerufene Teilnehmer den Ruf annimmt ("abhebt") und statt der Rufquittung Daten aussendet. Der rufende Teilnehmer erkennt dies und geht ebenfalls in den Gesprächszustand über.

Das Ende einer Verbindung erfolgt dadurch, daß - wegen des "Auflegens" eines Teilnehmers - in der Zeitlage der Verbindung leere Zeitplatzinhalte erscheinen. Die andere Teilnehmerstation erkennt, daß innerhalb des für die Verbindung belegten Zeitplatzes leere Zeitplatzinhalte ausgesendet werden und beendet ihrerseits die Verbindung, indem sie das Senden einstellt.

- 18 -

Wird ein Teilnehmer gerufen, wird dies mittels des Vergleichers 24 und des Speichers 25 des gerufenen Teilnehmers erkannt. Er speichert, sofern er unbelegt ist, nach einer Zulässigkeitsprüfung die Zeitlage des Rufes im Zeitplatznummernspeicher seiner Kanalverwaltung 31 ab. Damit liegt auch hier der Zeitpunkt des Empfangens und des Sendens fest. Der gerufene Teilnehmer antwortet dem rufenden Teilnehmer mit einer Rufquittung, die aus der Dienstekennung, der quittierten Absenderadresse und der eigenen Adresse zusammengesetzt wird. Im Falle, daß eine Rufquittung ausgesendet wird, erzeugt die Teilnehmerstation einen Rufton. Sollte der Ruf eingestellt werden, wird die Rufquittung ebenfalls abgebrochen. Der Übergang in den Gesprächszustand und das Verbindungsende folgen wie bereits oben beschrieben.

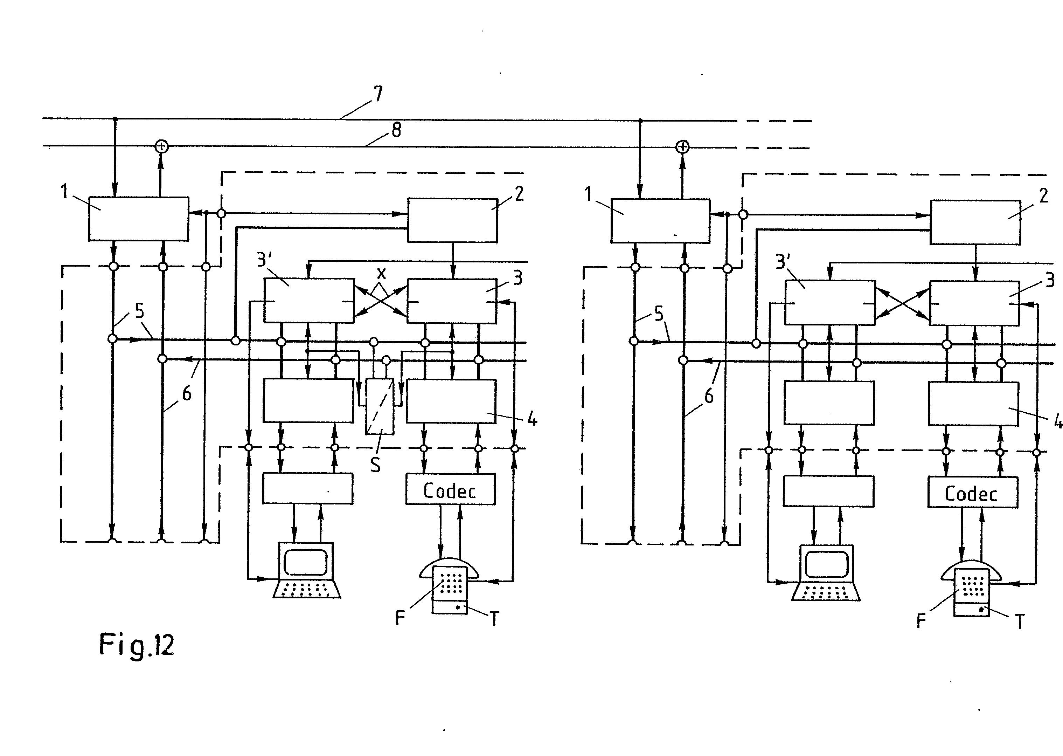

Anhand der Fig. 12 und dem nachfolgenden Schema ist zu erkennen, über welche Einzelteile des Systems und insbesondere der Teilnehmerstation eine bestehende Normalverbindung abgewickelt wird. Hierbei wird der linke Teil der Fig. 12 einem Teilnehmer A, der rechte Teil einem Teilnehmer B zugeordnet.

<div style="text-align:center">Verbindung von A nach B</div>

A: F, Codec, 4, 3, 6 → 1, 8

8 → 7

B: 7 → 1, 5 → 3, 4, Codec, F

<div style="text-align:center">Verbindung von B nach A</div>

B: F, Codec, 4, 3, 6 → 1,8

8 → 7

A: 7 → 1, 5 → 3, 4, Codec, F

Rückfrageverbindung (s.a. Fig. 12)

Der Aufbau und die Unterhaltung einer Rückfrageverbindung läuft nach demselben Prinzip wie bei einer Normalverbindung ab, wobei von der betreffenden Teilnehmerstation während der Rückfrageverbindung die Normalverbindung in Wartestellung gehalten wird. Die Wartestellung bedeutet für die Normalverbindung, daß dort zwar keine Informationen, aber auch keine leeren Zeitplatzinhalte ausgesendet werden, was zugleich mit Betätigen z.B. einer Taste der Schalteinrichtung T bzw. der Anwahltastatur des Fernsprechgerätes geschieht, mit der auch der Aufbau der Rückfrageverbindung eingeleitet wird. Da der Verbindungssteuerteil 3 für die Normalverbindung eingesetzt ist, wird für die Rückfrageverbindung der Verbindungssteuerteil 3 verwendet, der sich entweder als zusätzlicher Baustein in der betreffenden Teilnehmerstation befindet oder auch als ein für einen Dienst der gleichen Bandbreitenklasse vorgesehener Modul eingesetzt und mit dem Verbindungssteuerteil 3 über Querverbindungen zusammengeschaltet ist.

Anhand der Fig. 12, bei der jetzt der linke Teil einem Teilnehmer B und der rechte Teil einem Teilnehmer C zugeordnet sein soll und der Teilnehmer A nicht dargestellt ist, ergibt sich für das Schema der für die Verbindungen benötigten Einzelteile:

Normalverbindung von A nach B (bei B in Wartestellung)
(Rückfragetaste bereits gedrückt)
B: 7→ 1, 5 →3 (Wartestellung), 6 →1, 8

Rückfrageverbindung von B nach C (Rückfragetaste s.o.)
B: F, Codec, 4, 3',6 →1, 8
8→ 7
C: 7→1, 5 → 3, 4, Codec, F

Rückfrageverbindung von C nach B
C: F, Codec, 4, 3, 6→1, 8
8→ 7
B: 7→1, 5 →3', 4, Codec, F

Die Rückfrageverbindung kann auf zwei Arten beendet werden. Entweder wird z.B. die Rückfragetaste beim Teilnehmer B erneut betätigt, dann wird die Rückfrageverbindung ausgelöst - leere Zeitplatzinhalte werden ausgesendet - und die Normalverbindung aus der Wartestellung zurückgerufen. Oder der Teilnehmer B betätigt eine Übergabetaste. Dadurch kommt es zum

Umlegen einer Normalverbindung

Hierbei sollen zunächst die selben Verhältnisse herrschen, die im Zusammenhang mit der Rückfrageverbindung erläutert wurden. Da sich die Normalverbindung beim Teilnehmer B in Wartestellung befindet, muß während der Rückfrageverbindung zwischen den Teilnehmern B und C geklärt werden, ob C das Gespräch mit A übernehmen will oder nicht, damit der Teilnehmer B weiß, ob er die Rückfragetaste erneut oder die Übergabetaste zu betätigen hat. Beim Betätigen der Übergabetaste wird nun beim Teilnehmer B der Speicherregistersatz S eingeschaltet, der dort einen Informationskurzschluß zwischen den Kanälen der Normalverbindung und der Rückfrageverbindung herstellt. Damit läuft die bei B umgelegte Normalverbindung vom Teilnehmer A wie bisher zur Teilnehmerstation B und von dort über die Rückfrageverbindung weiter zu C. Damit folgt für das Schema:

Bei B umgelegte Normalverbindung von A nach C A: F, Codec, 4, 3, 6→1, 8

8→7

B: 7→1, 5→3, S, 3', 6→1, 8 8→7

C: 7→1, 5→3, 4, Codec, F

und von C nach A C: F, Codec, 4, 3, 6→1, 8

8→7

B: 7→1, 5→3', S, 3, 6→1, 8

8→7

A: 7→1, 5→3, 4, Codec, F

Die kanalweise Zwischenspeicherung der Informationen in jeweils einer Zelle des Speicherregistersatzes S wird durch die Verbindungssteuerteile 3 und 3' gesteuert, indem in Richtung A - C die Empfangskoinzidenz zum Einlesen vom Verbindungssteuerteil 3, die Sendekoinzidenz zum Auslesen vom Verbindungssteuerteil 3' und in Richtung C - A die Empfangskoinzidenz zum Einlesen vom Verbindungssteuerteil 3' und die Sendekoinzidenz zum Auslesen vom Verbindungssteuerteil 3 abgeleitet werden.

Beim Teilnehmer B können während des Bestehens der umgelegten Normalverbindung zwischen den Teilnehmern A und C dann weitere Verbindungen - Normalverbindungen, Rückfrageverbindungen - aufgebaut, angenommen und unterhalten werden, wenn dort bei seiner Teilnehmereinrichtung zwei oder mehrere zusätzliche Verbindungssteuerteile und Speicherregistersätze vorhanden sind. Da er ohnehin
jeweils nur zu unterschiedlichen Zeiten die Teilnehmereinrichtung,
z.B. den Fernsprechapparat für verschiedene Verbindungen benutzen
kann, brauchen für ein- und denselben Dienst der Formatwandler 4
und der Coder/Decoder (Codec) bzw. Interface und betreffende Teilnehmereinrichtung nur einfach vorhanden zu sein.

Automatische Abwicklung

Nach den oben erläuterten Grundsätzen für Rückfrageverbindungen
und das Umlegen von Normalverbindungen können bei Ausführungsformen der Erfindung automatisch abzuwickelnde Leistungsmerkmale realisiert werden, indem man bei den Teilnehmereinrichtungen selbsttätig arbeitende Schalteinrichtungen vorsieht. Hierzu gehört z.B.
die - Rufumleitung, bei der eine Teilnehmerstation mit einer entsprechend ausgerüsteten Schalteinrichtung T bereits im voraus auf
die Herstellung einer Rückfrageverbindung zu einer bestimmten anderen Teilnehmerstation und/oder deren Übergang auf das Umlegen
einer Normalverbindung eingestellt wird. Auf diese Weise können
z.B. Teilnehmer während einer Besprechung unter einer anderen Rufnummer (Adresse) erreicht oder statt dieses Teilnehmers auf einen
Ansagedienst geschaltet werden.

Bei einer
- Rufweiterschaltung kann eine Rufumleitung nach Ablauf einer
  vorherbestimmten Zeitdauer erfolgen. Dieses Leistungsmerkmal
  ist z.B. für solche Fälle von Bedeutung, bei denen ein Teilnehmer wohl vorwiegend unter der einen, manchmal oder häufiger
  aber auch unter einer anderen Rufnummer zu erreichen ist.

Ähnlich einer unbedingten Rufumleitung oder einer bedingten Rufweiterschaltung kann auch eine
- Umleitung auf ein andersartiges Nachrichtensystem, z.B. auf
  eine Personenruf- oder-suchanlage erfolgen. Dabei würde z.B.
  eine Teilnehmerstation des dezentralen Netzes angewählt werden,
  bei der anstelle der gem. Fig. 1 vorgesehenen Teilnehmereinrichtungen drahtlos oder leitergebunden anzusteuernde Endgeräte vorgesehen sind. Da bei dieser Umleitung die Rufnummer (Adresse) des an seinem Fernsprechapparat nicht erreichbaren Teilnehmers als Absenderadresse bei einer Rückfrageverbindung übermittelt wird, kann ohne Schwierigkeiten eine Umkodierung für die Ruf- oder Suchanlage erfolgen.

Ohne diese beispielhafte Aufzählung von Leistungsmerkmalen auf die erläuterten Formen beschränken zu wollen, sei noch ein Fall einer bedingten automatischen Umlegung erwähnt: die
- Rufumleitung im Besetztfall, bei der sich z.B. die Zentrale einer Nebenstellenanlage einschaltet, wenn beim gewünschten Teilnehmer keine Einrichtungen für den betreffenden Dienst frei sind. Insbesondere solche zentralen Teilnehmerstationen sind mit mehreren zusätzlichen Verbindungssteuerteilen und Speicherregistersätzen auszurüsten, damit dort die Wahrscheinlichkeit für das Auftreten eines Besetztfalles gering gehalten wird.

Wie den bisherigen Ausführungen zu entnehmen ist, ermöglicht die Erfindung eine universelle Verwendbarkeit von Schaltungsanordnungen für Teilnehmerstationen, die den Gegebenheiten entsprechend nur um einige zusätzliche Baueinheiten zu ergänzen sind. Diese zusätzlichen Baueinheiten sind ihrerseits teilnehmer- und diensteunspezifisch ausgebildet. Bezüglich der Geschwindigkeitsumsetzung gliedert sich eine Hochfrequenzeinheit in einen Empfangsteil und in einen Sendeteil, die unabhängig voneinander Daten aus dem Netz entnehmen bzw. in das Netz einkoppeln. Bezüglich der Synchronisierung werden aus dem Informationsfluß Bit-, Wort- und Rahmentakt zurückgewonnen und in geordneter Weise zu den Daten ausgegeben.

Die Nachrichtenrate auf dem Empfangsdatenbus 5 bzw. auf dem Sendedatenbus 6 kann geringer sein als 10 Mbit/s, so daß die nachfolgenden Module der Teilnehmerstationen in langsamer störsicherer Logik ausgeführt werden können.

Der gesamte Empfangsdatenstrom wird in den nachfolgenden Modulen zur Verarbeitung angeboten. Sendeseitig erfolgt eine autonome und zur Empfangsseite entgegengesetzt verlaufende Bearbeitung. Mit Hilfe der angelieferten, aus dem Netz abgeleiteten Takte werden die Nachrichten von den Modulen autonom der Sendeseite in geordneter Weise angeboten. Diese Daten werden im Bedarfsfall durch Parallel-Serien-Wandlung in eine sendegerechte Form gebracht und geordnet in den Sendedatenstrom des Netzes eingekoppelt.

Die Sendeseite ist mit Einrichtungen ausgestattet, die bei einem Stromausfall die Einkoppelstelle überbrücken. Damit kann der Sendestrom die betriebsunfähige Einkoppelstelle ungestört passieren.

Mit der Kanalbelegungsprüfeinheit, die entweder direkt oder mittelbar mit den Bit-, Wort- und Rahmentakten versorgt wird, werden die Kanäle des gesamten Datenstromes beobachtet. Dort wird festgestellt, ob ein Kanal frei ist, besetzt oder durch eigene Signalisierung belegt ist. Die Erkenntnisse darüber werden in Form digitaler Signale (frei, Ruf, belegt) an die nachfolgenden Module weitergeleitet. Gleichzeitig wird die Nummer des beobachteten Kanals weitergegeben. Anhand des Wort- und Rahmentaktes der Sendeseite und der Empfangsseite werden die aktuellen Kanalnummern mit Zeitplatzzählern registriert und den nachfolgenden Modulen zugeführt.

Die Teileinheiten des Verbindungssteuerteils korrespondieren miteinander und können als mikroprogrammierbares Steuerwerk oder mikroprozessorgesteuert ausgeführt sein. Dort werden die Ablaufalgorithmen am Endgerät wie z.B. Abheben, Ziffern wählen usw. kontrolliert und entsprechende Quittungssignale ausgegeben, wie z.B. Rufton, Wählton, Freizeichen usw. Abhängig davon, ob ein Ruf einläuft oder eine Verbindung aufgebaut werden soll, aktivieren sich die Teileinheiten gegenseitig in geordneter Weise. Bei einlaufenden Rufen wird die Ordnungsnummer des Empfangskanals gespeichert und die Nummer des zugehörigen Sendekanals auf der Sendeseite bestimmt. Im Signalisierzustand einer Verbindung arbeiten ein Wahlsatz und ein Rufquittungsregister zusammen und rufen kanalgerecht die Wahl aus dem Wahlsatz ab, bzw. laden sie in ein Rufquittungsregister zur weiteren Auswertung. Im Zustand des Datenaustausches werden die Daten zusammen mit dem Formatwandler an die Endgeräte weitergegeben bzw. aus diesen abgerufen. In Empfangsrichtung werden vom Formatwandler die parallelisierten Daten kanalgerecht aufgenommen und in äquidistante Bitgruppen umgeformt. Gleichzeitig wird der Begleittakt einem nachgeschalteten Decoder zu dessen Betrieb zugeführt. In Senderichtung wird vom Formatwandler der äquidistante Ladetakt zur Aufnahme von Bitgruppen aus den Codern der Endgeräte geliefert. Diese Bitgruppen werden vom Formatwandler gesammelt und zu einem kompletten Zeitplatz aufbereitet, der sodann mit Hilfe der Signale aus dem Zeitmultiplex-Nachrichtennetz an dieses übergeben wird. Die Breite der an das Endgerät übergebenen bzw. von ihm aufzunehmenden Bitgruppen kann durch eine Programmierung am Endgerätestecker festgelegt werden. Ausgehend von einer maximalen Breite von 16 Bit kann z.B. auf 8, 4 und 1 Bit reduziert werden. Durch dieselbe Programmierung werden auch Ladetakte zugeordnet.

Bezüglich des Einsatzes mehrerer Teilnehmerstationen als Konzentrator wird ein Hochfrequenzteil benötigt, der zumindest mit einem Geschwindigkeitsumsetzer ausgerüstet ist. Hinzu kommen pro Teilnehmerstation eine Kanalbelegungsprüfeinheit und für jede Teilnehmereinrichtung eine aus einem Verbindungssteuerteil und einem Formatwandler bestehende Baugruppe. Zur Reduzierung der Leitungszahlen der Teilnehmerleitung, d.h. also zwischen der Teilnehmerstation im Konzentrator und dem zugehörigen Endgerät kann eine Leitungsanpassungseinheit vorgesehen werden. Diese Maßnahme kommt insbesondere dann in Betracht, wenn die Teilnehmerleitung sehr lang, beispielsweise wie bisher üblich etwa 1.300 m lang, ist. Hiermit werden die Signalisierzeichen auf die Datenleitung gekoppelt bzw. dieser entnommen, so daß die Verbindung zwischen der Teilnehmerstation und dem Endgerät mit maximal 3 Leitungen erfolgen kann. Diese drei Leitungen dienen dem Datenhinweg, dem Datenrückweg und der Erdung.

Die als modularisierte Teilnehmerstationen ausgebildeten Ausführungsformen der Erfindung haben den Vorzug, daß bereits vorhandene derartige Einrichtungen modulweise für alle in dem Nachrichtensystem angebotenen Dienste ersetzt, verändert oder erweitert werden können bei Beibehaltung der bereits vorhandenen und benutzten Schaltungen und ohne daß dabei deren Betrieb gestört oder beeinflußt würde. Ebenso kann durch Hinzufügen teilnehmerspezifischer

0009461

und dienstespezifisch eingesetzter Teilschaltungen ein Konzentrator gebildet werden, der dann aus gleichberechtigten baugleichen Teilnehmerstationen besteht. Rückwirkungen von Störungen in einzelnen Diensten auf intakte Dienste sind dabei ausgeschlossen.

Ein weiterer wesentlicher Vorteil ist mit der universellen Verwendbarkeit weniger Module verbunden, die diensteunabhängig wiederholt verwendet werden können. Infolge der begrenzten Aufgaben für den Einzelmodul ist die Ausführung in integrierter Technik (LSI) möglich, so daß ein sehr raumsparender Aufbau in langsamer, störsicherer Logik erfolgen kann.

Ein wesentlicher Vorzug der Erfindung liegt darin, daß auch die für die zusätzlichen Leistungsmerkmale bei einer Teilnehmerstation bei Ausführungsformen der Erfindung benötigten Bauteile unabhängig davon verwendbar sind, ob das digitale Zeitmultiplex-Nachrichtennetz mit einer ringförmigen oder mit einer unverzweigten oder verzweigten Einfach- oder Mehrfach-, insbesondere Doppelleitung aufgebaut ist. Werden solche Zeitmultiplex-Nachrichtennetze als Nebenstellenanlage eingesetzt, ist der Übergang in das öffentliche Netz durch eine Überleitungseinrichtung herzustellen, die eine Art Teilnehmerstation in abgewandelter und teilweise erweiterter Form darstellt. Bei den einzelnen Teilnehmerstationen gibt es im Grundaufbau keinen Unterschied, ob sie direkt an das öffentliche Netz oder in einer Nebenstellenanlage angeschlossen sind. Die sonst nur bei herkömmlichen Nebenstellenanlagen zu findenden Leistungsmerkmale können hierbei sowohl in Nebenstellenanlagen als aber auch in öffentlichen Netzen realisiert werden. Da bei dem Prinzip, nach dem bei den Ausführungsformen der Erfindung eine Rückfrageverbindung und eine Umlegung einer Normalverbindung bzw. die darauf zurückführbaren Dienste abgewickelt werden, die die Rückfrageverbindung herstellende Teilnehmerstation auch während einer umgelegten Normalverbindung mit eingeschaltet bleibt, ergeben sich auch keine Schwierigkeiten bezüglich der Belastung mit den anfallenden Gebühren: diejenige Teilnehmerstation, von der aus eine Verbindung aufgebaut wird, wird auch mit den Gebühren belastet. Will ein Teilnehmer für eine von ihm aus umzulegende Normalverbindung die Gebühren nicht übernehmen, übergibt er einfach die Normalverbindung nicht, sondern kann während der Normalverbindung bzw. der Rückfrageverbindung die jeweiligen Partner auffordern, eine neue Normalverbindung untereinander und ohne ihn aufzubauen.

- 1 -

Heinrich-Hertz-Institut für Nachrichtentechnik Berlin GmbH

Patentansprüche        1.07 + 1.09/78 EP

1. Schaltungsanordnung für Teilnehmerstationen zum Anschalten von Teilnehmereinrichtungen an ein digitales Zeitmultiplex-Nachrichtennetz mit dezentraler Vermittlung,
gekennzeichnet durch
innerhalb einer Teilnehmerstation voneinander für die Sende- und die Empfangsrichtung getrennte Leitungen und in sich abgeschlossene , für bestimmte Funktionen baugleiche Einheiten, nämlich:

- eine Kanalbelegungsprüfeinheit für jede Teilnehmerstation und
- eine aus einem Verbindungssteuerteil und einem Formatwandler gebildete Gruppe für jede Teilnehmereinrichtung.

2. Schaltungsanordnung nach Anspruch 1,
gekennzeichnet durch einen allen an eine Ein-/Auskoppelstelle des Netzes angeschalteten Teilnehmerstationen gemeinsamen Geschwindigkeitsumsetzer mit einem Parallel-/Serien-Wandler bzw. Serien-/Parallel-Wandler für die Sende- bzw. Empfangsrichtung.

3. Schaltungsanordnung nach Anspruch 1 oder 2,
gekennzeichnet durch eine allen an eine Ein-/Auskoppelstelle des Netzes angeschalteten Teilnehmerstationen gemeinsame Einrichtung zur Rückgewinnung der für die Rahmenstruktur charakteristischen und zur Synchronisierung benötigten Signale.

4. Schaltungsanordnung nach einem der Ansprüche 1 bis 3,
gekennzeichnet durch Querverbindungen zwischen Verbindungssteuerteilen für Teilnehmereinrichtungen gleicher Bandbreitenklasse.

5. Schaltungsanordnung nach einem der Ansprüche 1 bis 4,
gekennzeichnet durch Leitungsanpassungseinheiten für jede an eine Teilnehmerstation angeschlossene Teilnehmereinrichtung.

6. Schaltungsanordnung nach einem der Ansprüche 1 bis 5, gekennzeichnet durch einen zusätzlichen Verbindungssteuerteil und einen Speicherregistersatz sowie Schalteinrichtungen für eine Teilnehmereinrichtung zum Aufbau und zur Unterhaltung einer gleichzeitigen zweiten Verbindung bzw. zur Weitervermittlung der ersten auf die zweite Verbindung.

7. Schaltungsanordnung nach Anspruch 6, gekennzeichnet durch eine selbsttätig arbeitende Schalteinrichtung für eine Teilnehmereinrichtung zum automatischen Aufbau einer gleichzeitigen zweiten Verbindung bzw. automatischen Weitervermittlung der ersten auf die zweite Verbindung.

8. Schaltungsanordnung nach Anspruch 6 oder 7, gekennzeichnet durch zwei oder mehrere zusätzliche Verbindungssteuerteile und Speicherregistersätze je Teilnehmereinrichtung.

Fig.1

Fig. 2

Fig. 3

Fig. 4

Fig. 5

0009461

SG

UE

S

SR

TS

SR

<u>Fig. 6</u>

UE'

SG'

TS'

TS'

Fig. 7

UE×

SG×

TS×

TS×

Fig. 8

SG ( SG', SG× )

UE ( UE', UE× )

UE°

SG°

TS°       TS°

TS ( TS',TS× )       TS ( TS',TS× )

Fig. 9

8/11

0009461

Fig. 10

Fig.11

0009461

Fig.12